# EUROPEAN PATENT SPECIFICATION

(11) **EP 1 781 049 B1**
(45) Date of publication and mention of the grant of the patent: **07.12.2011**
(21) Application number: 05110141.8
(22) Date of filing: 28.10.2005
(51) Int. Cl.: H04W 4/10

(54) **Methods and apparatus for push to talk type service**
Verfahren und Gerät zum Push-To-Talk-änlichen Dienst
Méthode et appareil pour un service du type push-to-talk

(43) Date of publication of application: 02.05.2007
(73) Proprietor: Telefonaktiebolaget L M Ericsson (publ), 164 83 Stockholm (SE)
(72) Inventor: Albertsson, Henrik, 118 24, Stockholm, (SE); Holm, Jan, 748 40, Örbyhus (SE)
(74) Representative: Brewer, Michael Robert

(56) References cited:
- EP-A- 1 361 712
- US-A1- 2005 054 287
- US-A1- 2005 136 955

## Description

### BACKGROUND OF THE INVENTION

### 1. Field of the Invention

The present invention relates to methods and apparatus for use in a push to talk type service, for example a so-called push to talk over cellular service.

### 2. Description of the Related Art

Walkie-talkie type services have long proved popular amongst users who wish to communicate brief messages quickly between one another. Conventionally, such services have been provided by two-way portable radios which utilise a dedicated part of the radio spectrum, but which only allow users to communicate with a small group of pre-selected users who utilise similar terminals and who are within range of the relatively short operating range of the radios. More recently, services have been introduced into the United States which piggy-back on the existing cellular telephone infrastructure. However, these services have been proprietary in nature and have not allowed users to communicate between different operator networks.

In an attempt to broaden the use of walkie-talkie type services, an industry grouping known as the Open Mobile Alliance (www.openmobilealliance.org) has been established with the aim of standardising suitable protocols which will allow inter-network operability for Walkie-Talkie services offered over cellular networks. The service established by the various standards is known as Push to talk Over cellular (PoC). PoC proposes that associated speech data will be transported over a packet switched access network. In the case of GSM and UMTS, this will be the general packet radio service (GPRS) or 3G access network. In other network architectures, analogous packet switched access networks will be utilised for transporting talk data. Push to Talk services may also be offered over circuit switched access networks, although this is not the preferred option.

The Push to talk over Cellular (PoC) system is typically implemented on GSM/GPRS/3G networks and which makes use of the IP Multimedia Subsystem (IMS) standardised by the 3^{rd} Generation Partnership Project to facilitate the introduction of advanced data services into cellular networks, and in particular of real-time multimedia services. The IMS relies upon the Session Initiation Protocol (SIP) which has been defined by the Internet Engineering Task Force (IETF) for the setting up and control of multimedia IP-based sessions. A PoC Server is located within the IMS or is attached thereto, and implements the functionality for setting up and controlling PoC Sessions.

Existing push-to-talk (PTT) and conferencing systems typically use a control mechanism to grant one of the users the right to speak while other users in the communication are denied such right and are in listening mode. Such control mechanism is typically referred to as floor control, talker arbitration, talk burst control, etc. For example, the Open Mobile Alliance is currently working on a specification of Push-To-Talk over Cellular (PoC) system, which includes Talk Burst Control Protocol (TBCP).

To request the right to speak on behalf of the user, the terminal (PoC Client) typically sends a request message to the controller (PoC Server). The controller typically responds either granting or rejecting the request. The controller typically restricts the time the user is allowed to talk, typically by starting an allowed talk timer when it grants the request, and uses some mechanism to interrupt the user, typically by sending a revoke message to the user's terminal or by simply not forwarding the user's media. The user who is interrupted by the controller is typically penalised by the controller in some way, e.g. by not granting the user the right to speak for a certain period of time.

The next version of OMA PoC (herein called "PoC 2", with the previous version being called "PoC 1") is evolving in OMA. In PoC 1 the invitations are plain session invitations, whereas in PoC 2 the invitation may contain some multimedia content, such as a picture. The following extract is from the OMA PoC 2 Requirement Document [OMA-RD-PoC-V2_0-20050902-D Push to Talk Over Cellular 2 Requirements, Draft Version 2.0 - 02. September 2005]: "When inviting PoC User(s) to a PoC Session or when sending Group Advertisement message the media components can be added to the requests". Also from the OMA PoC 2 Requirement Document: "A PoC Client MAY add media component(s) to the PoC Session invitation(s) sent to PoC User(s)"; "A PoC Client SHALL support receiving of PoC Session invitation(s), which MAY include media component(s). Depending on the PoC Clients capability for the included media component(s) PoC Client SHOULD replay the received media component(s)"; "A PoC Client MAY add media component(s) to the Group Advertisement message(s) sent to PoC User(s)"; "A PoC Client MAY support the receiving Group Advertisement message(s), which MAY include media component(s) from PoC User(s). Depending on the PoC Clients capability for the included media component(s) PoC Client SHOULD replay the received media component(s)"; "The PoC Service infrastructure MAY add/remove/change media component(s) to the PoC Session invitation(s) according to the configuration set by inviting and invited PoC Client"; "Media component SHALL be either a reference to the media content or contain the content directly. Examples of content types can be found in [RFC 2046, Multipurpose Internet Mail Extensions (MIME) Part Two: Media Types]"; "The PoC Service infrastructure MAY be able to add/remove/change media content according to the reference to the media content"; "It SHALL be possible to limit the size and content of the media component(s) based on the service policies of the PoC service providers of the inviting and invited PoC subscribers and/or setting of inviting PoC client and invited PoC client"; "The PoC Service infrastructure SHALL be able to filter out the included media component based on the service policies of the PoC service providers of the inviting and invited PoC subscribers and/or setting of inviting PoC client and invited PoC client"; and "Settings by the PoC Service infrastructure SHALL have precedence over settings by PoC clients".

An invitation to a PoC Session is made by a SIP Invite message. Including a media payload into the SIP message is possible, but if it is of any reasonable size then this will have severe consequences for the SIP infrastructure (such as the Call Session Control Function or CSCF). Sending this form of payload in a SIP message will flood all the SIP stacks and the overall performance will be compromised.

It is desirable to address this problem.

EP1361712A discloses a method for communicating messages, such as multimedia messaging service (MMS) messages, to a device. Only messages notified by a known and identified MMS center are downloaded to the device.

US 2005/0136955 discloses a technique for combining voice with wireless text short massage services (SMS). A link within each message allows adding or retrieval of a voice message associated with the SMS text message.

### SUMMARY OF THE INVENTION

According to a first aspect of the present invention there is provided a method of including media content in a session invite procedure of a push to talk type service, comprising, at least if it is determined that the media content is larger than a predetermined size, sending a representation of the media content in a message inviting a second terminal to establish a push to talk type session with a first terminal, and separately sending the media content itself, the representation being smaller than the media content itself.

The method may comprise sending the media content itself in the session invite message if it is determined that the media content is not larger than the predetermined size.

The method may comprise sending the session invite message from the first terminal to a server designated to control the session, and forwarding the invite message from the server to the second terminal.

The method may comprise producing the representation from the media content.

The representation may be produced at the first terminal.

The method may comprise sending the media content such that it is available for use at the second terminal after the session invite has been accepted at the second terminal.

At least one of the session invite message and the media content may be sent from the first terminal to the second terminal.

The method may comprise sending the media content after the session invite has been accepted at the second terminal.

A floor may be granted to the first terminal following acceptance of the session invite, and the method may comprise sending the media content over the granted floor.

The method may comprise sending the media content without an explicit request for it from the second terminal.

The method may comprise sending the media content in response to a request for it from the second terminal.

The method may comprise receiving the media content at the second terminal as a background process on the second terminal.

The representation may comprise an extract from the media content.

The representation may comprise at least part of the media content to which compression and/or resolution reduction has been applied.

The media content may comprise one or more of image content, video content and audio content.

The method may comprise presenting the media content at the second terminal following receipt.

Presenting the media content may comprise, in the case of image content, displaying the image content on a screen of the second terminal, and, in the case of video content, playing the video content on a screen of the second terminal, and, in the case of audio content, playing the audio content on a speaker of the second terminal.

The media content may be presented in response to a request from a user of the second terminal.

The invite message may be an Invite message of the Session Initiation Protocol.

The push to talk type service may be a push to talk over cellular service.

The push to talk type service may be a conferencing service.

The invite message may comprise at least an implicit floor request for the requested session.

The method may comprise processing the media content before sending it.

According to a second aspect of the present invention there is provided an apparatus operable to include media content in a session invite procedure of a push to talk type service, comprising means for, at least if it is determined that the media content is larger than a predetermined size, sending a representation of the media content in a message inviting a second terminal to establish a push to talk type session with a first terminal, and separately sending the media content itself, the representation being smaller than the media content itself. The apparatus may comprise the first terminal.

According to a third aspect of the present invention there is provided a method of including media content in a session invite procedure of a push to talk type service, comprising receiving a representation of the media content in a message inviting a second terminal to establish a push to talk type session with a first terminal, and separately receiving the media content itself, the representation being smaller than the media content itself.

According to a fourth aspect of the present invention there is provided an apparatus operable to include media content in a session invite procedure of a push to talk type service, comprising means for receiving a representation of the media content in a message inviting a second terminal to establish a push to talk type session with a first terminal, and separately receiving the media content itself, the representation being smaller than the media content itself. The apparatus may comprise the second terminal.

According to a fifth aspect of the present invention there is provided an operating program which, when loaded into an apparatus, causes the apparatus to become an apparatus according to the second or fourth aspect of the present invention.

According to a sixth aspect of the present invention there is provided an operating program which, when run on an apparatus, causes the apparatus to carry out a method according to the first or third aspect of the present invention.

The operating program may be carried on a carrier medium. The carrier medium may be a transmission medium. The carrier medium may be a storage medium.

An embodiment of the present invention enables the load on the SIP infrastructure for multi media invitations to be limited, at the same time as making it possible effectively to convey large content by way of the invitations.

An embodiment of the present invention provides a two-step approach that transfers a miniature of the multimedia content at the same time transferring the original content over the media plane.

In an embodiment of the present invention, the sender of a multimedia invitation can make a resized copy of the multimedia content and send that in the invite over the control signal channel. The maximum size for the resized content may be set by the client or the service provider policy and then notified to the client.

The terminating controlling server may have the option based on user configuration to remove the multimedia parts of the invite message and thereby render it a non-multimedia ("a normal") invite towards the invited user. In the accept or deny reply for that invite, the server (or implicitly by the reply from the invited user) may inform the inviter to that the invited user does not use a multimedia invite but may accept the session invitation anyhow. In that case, the large content is not sent.

The multimedia invite may be an implicit floor request for control of a floor appropriate to send the content over. The floor may either be content dependent, or a dedicated floor used only for multimedia invites.

In an embodiment of the present invention, the large (not resized) content is distributed over the floor to the recipient as soon after the floor has been granted to the inviter.

In an embodiment of the present invention, the invited user first receives an invitation to a PoC Session in their display, and if they accept this then they will have the option of viewing the large content.

### BRIEF DESCRIPTION OF THE DRAWINGS

Figure 1 is a message exchange diagram schematically illustrating the exchange of messages between two PoC Clients and a PoC Server in an embodiment of the present invention; and
Figure 2 is a block diagram schematically illustrating parts of the PoC Clients of Figure 1.

### DETAILED DESCRIPTION OF THE PREFERRED EMBODIMENTS

In one embodiment of the present invention, large media content intended for inclusion in a multimedia invite is sent in two stages. In one example, where the media content comprises a picture, a copy of the picture is resized to a size suitable to transfer over SIP, for example to a size associated with an icon or thumbnail, and sent in the session invite. This is displayed on the terminating side as a thumbnail when the invitation is received, and can be used by the user as a basis for deciding whether or not to accept the invite. If the invite is accepted and the floor granted, the large unmodified picture is transported over the floor responsible for picture media. This is done in the background, and if the recipient decides after a time to view the full picture then it will be available immediately for display by clicking on the thumbnail.

It is likely that there will be a limitation as to how large a picture (or other type of media content) the SIP signalling network will be able to handle. SIP, as such, does not prevent the inclusion of a large payload in a SIP message such as a SIP Invite. However the SIP / IMS infrastructure, and in particular for the PoC domain the CSCFs of the SIP / IMS infrastructure, will nevertheless be put under strain if asked to handle a large amount of data. The SIP / IMS infrastructure is optimised for fast processing of the session signalling with only small messages without payload. If a large payload is included in the SIP messages then the SIP stacks in the SIP/IMS infrastructure will be flooded, leading to a poor overall system performance.

The upper limit on the payload part of a SIP message sent over the SIP/IMS infrastructure could, for example, be set at 1 kB, although the actual limit will of course depend on many factors. This magnitude of size would not be able to convey a large picture, but more like an icon or thumbnail, or a picture with low resolution.

With the evolution of today's handsets, with more and more advanced camera functions, it is likely that a user would wish to take a picture and use that as the "hook" to start a conversation with a third party. One possibility is to send only a suitably downsized version of the picture to the third party in the SIP Invite message. However, the picture might then be too limited to show all the details to the third party.

In an embodiment of the present invention, the image transfer is divided into two stages in order to provide acceptable functionality for the user, and at the same time operate within the limitations of the payload restrictions of the SIP/IMS infrastructure.

The idea is to send a small (resized) picture over the SIP infrastructure. This will be able to be displayed directly to the end user as part of the invitation information to the end user. Subsequently, the larger version of the picture is transferred in the background.

A basic concept that can be used in an embodiment of the present invention is the implicit floor request from PoC 1. With this concept, when a users sends a SIP Invite message to other users in order to start a PoC Session, it also makes an implicit floor request. This is in order to speed up the user getting the right to speak. The same concept can be used in an embodiment of the present invention, so that when the user sends a multimedia invitation for a PoC session, it will at the same time request the floor for the media contained in the invitation. Therefore the client can start to send the larger version of the media (preferably in the background) as soon as it is granted the floor.

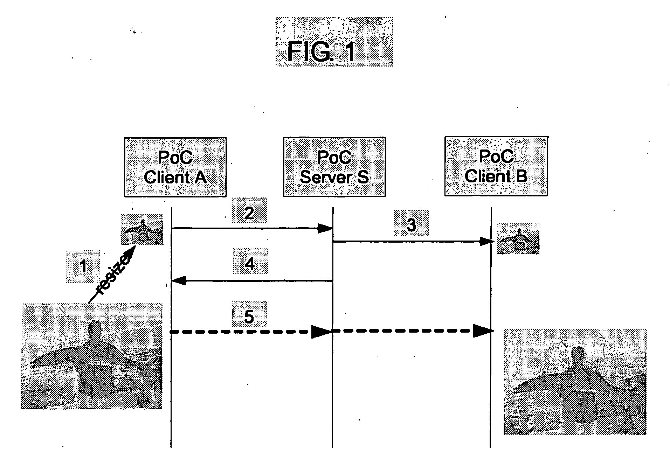

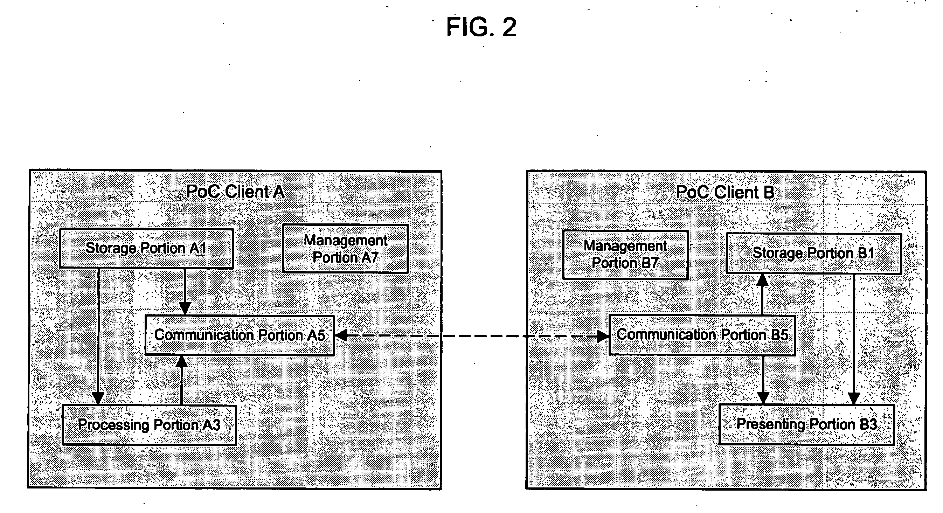

An embodiment of the present invention will now be described in more detail with reference to Figures 1 and 2. Figure 1 is a message exchange diagram illustrating the exchange of messages between PoC Clients A and B and a PoC Server S in this embodiment, while Figure 2 is a block diagram schematically illustrating parts of the PoC Clients A and B (the PoC Server S is not shown in Figure 2). PoC Client A comprises a storage portion A1, a processing portion A3, and a communications portion A5; these parts operate under overall control of a management portion A7. PoC Client B comprises a storage portion B1, a presenting portion B3, and a communications portion B5; these parts operate under overall control of a management portion B7.

Referring to Figure 1, in step 1 the picture to be sent is retrieved from the storage portion A1 of PoC Client A and is processed by the processing portion A3 of PoC Client A to produce a reduced-size representation for inclusion in the SIP Invite of step 2. In this example, the user of PoC Client A wishes to start a PoC Session with the user of PoC Client B to discuss or exchange information about fishing, and so the image selected by the user of PoC Client A is chosen appropriately.

In step 2, an invitation to a PoC Session is sent from the communications portion A5 of PoC Client A to the PoC Server S. The invitation is a SIP Invite message containing the reduced-size representation of the picture.

In step 3, the PoC Server S forwards the SIP Invite message to the intended recipient, the PoC Client B. This is received at the communications portion B5 of PoC Client B, and the reduced-size representation of the picture is extracted from the Invite message and displayed on the presenting portion (display portion) B3. Having viewed the reduced-size representation, the user of PoC Client B chooses to accept the session invitation (with acceptance signalling not shown).

In this embodiment, the invitation from steps 2 and 3 is also an implicit floor request (for example as defined in PoC 1), and in step 4 the floor is granted to PoC Client A with a message from the PoC Server to PoC Client A.

In step 5, the large picture is retrieved from the storage portion A1 and is transmitted from PoC Client A over the floor using the communications portion A5. The large image is received at the communications portion B5 of PoC Client B, and is stored in the storage portion B 1 of PoC Client B. This happens in the background from the point of view of PoC Client B.

Should the user of PoC Client B now wish to view the larger image, they would (for example) be able to click on the reduced-size representation on the screen, and the larger image that has been transferred in the background can be retrieved from the storage portion B1 and viewed.

It may be that PoC Client B has a user configuration or a service provider policy that does not allow multimedia invites. In that case, the PoC server S might have the option to remove the multimedia part of the SIP Invite message before forwarding it to the client. The invitation reply from the invited user will indicate that the multimedia part of the invitation will not be accepted, so that the transfer of the larger payload will not be carried out.

Although the above illustration has focussed on the transfer of pictures, it will be appreciated that an embodiment of the present invention can be applied in a corresponding manner to other media types. For example, for video the reduced-size representation might comprise only the first frame of the clip, or another frame chosen by the user, or an extract from the video, or part of the video with a compression or size reduction algorithm applied, or a combination of these. The application to other media types such as audio will be readily apparent to the skilled person.

Although an embodiment of the present invention is described above in relation to PoC, it will be appreciated that the invention is not limited to PoC. The term "push to talk" service is used here to identify services of a walkie-talkie nature. These are services that allow two or more users to be connected together quickly for the exchange of talk bursts. Push to Talk services differ from conventional voice calls in that these services allow only one person to talk at a given time. In order to talk, users must have control of the "floor". Control is typically achieved by one user releasing a talk button to release floor control, and another user pressing a talk button to assume floor control. It is to be understood that the term "push to talk" used in the appended claims is not intended to imply the use of any particular protocol.

It is also to be understood that an embodiment of the present invention is not limited to the transfer of talk or speech data in a talk session, and is applicable to the transfer of any type of data in a data transfer session, including but not limited to speech data. As such, terminology such as "Talk Burst Request" and "Talk Burst" is not to be interpreted as being limited to talk, i.e. speech, data only, but is used for consistency with PoC I terminology; such phrases can include within their meaning the transfer of any type of data. In PoC 2, different terminology may be used for concepts that correspond directly with those in PoC 1; for example the phrases "Media Burst Request" and "media Burst" may be used instead

It is also to be understood that an embodiment of the present invention is applicable to conferencing systems in which a participant is granted floor control and hence the right to speak or transfer data to other participants in the conference.

It will be appreciated that operation of one or more of the above-described components can be controlled by a program operating on the device or apparatus. Such an operating program can be stored on a computer-readable medium, or could, for example, be embodied in a signal such as a downloadable data signal provided from an Internet website.

## Claims

1. A method of including media content in a session invite procedure of a push to talk type service, **characterised by** comprising, at least if it is determined that the media content is larger than a predetermined size, sending (2) a representation of the media content in a message inviting a second terminal (B) to establish a push to talk type session with a first terminal (A), and separately sending (5) the media content itself, the representation being smaller than the media content itself.

2. A method as claimed in claim 1, comprising sending the media content itself in the session invite message if it is determined that the media content is not larger than the predetermined seize.

3. A method as claimed in claim 1 or 2, comprising sending the session invite message from the first terminal (A) to a server (S) designated to control the session, and forwarding the invite message from the server (S) to the second terminal (B).

4. A method as claimed in claim 1, 2 or 3, comprising producing the representation from the media content.

5. A method as claimed in claim 4, wherein the representation is produced at the first terminal (A).

6. A method as claimed in any preceding claim, comprising sending the media content such that it is available for use at the second terminal (B) after the session invite has been accepted at the second terminal (B).

7. An apparatus as claimed in any preceding claim, wherein at least one of the session invite message and the media content is sent from the first terminal (A) to the second terminal (B).

8. A method as claimed in any preceding claim, comprising sending the media content after the session invite has been accepted at the second terminal (B).

9. A method as claimed in claim 8, wherein a floor is granted to the first terminal (A) following acceptance of the session invite, and comprising sending the media content over the granted floor.

10. A method as claimed in any preceding claim, comprising sending the media content without an explicit request for it from the second terminal (B).

11. A method as claimed in any one of claims 1 to 10, comprising sending the media content in response to a request for it from the second terminal (B).

12. A method as claimed in any preceding claim, comprising receiving the media content at the second terminal (B) as a background process on the second terminal (B).

13. A method as claimed in any preceding claim, wherein the representation comprises an extract from the media content.

14. A method as claimed in any preceding claim, wherein the representation comprises at least part of the media content to which compression and/or resolution reduction has been applied.

15. A method as claimed in any preceding claim, wherein the media content comprises one or more of image content, video content and audio content.

16. A method as claimed in any preceding claim, comprising presenting the media content at the second terminal following receipt.

17. A method as claimed in claim 16, when dependent on claim 15, wherein presenting the media content comprises, in the case of image content, displaying the image content on a screen of the second terminal (B), and, in the case of video content, playing the video content on a screen of the second terminal (B), and, in the case of audio content, playing the audio content on a speaker of the second terminal (B).

18. A method as claimed in claim 16 or 17, wherein the media content is presented in response to a request from a user of the second terminal (B).

19. A method as claimed in any preceding claim, wherein the invite message is an Invite message of the Session Initiation Protocol.

20. A method as claimed in any preceding claim, wherein the push to talk type service is a push to talk over cellular service.

21. A method as claimed in any preceding claim, wherein the push to talk type service is a conferencing service.

22. A method as claimed in any preceding claim, wherein the invite message comprises at least an implicit floor request for the requested session.

23. A method as claimed in any preceding claim, comprising processing the media content before sending it.

24. An apparatus operable to include media content in a session invite procedure of a push to talk type service, **characterised by** comprising means (A5) for, at least if it is determined that the media content is larger than a predetermined size, sending (2) a representation of the media content in a message inviting a second terminal (B) to establish a push to talk type session with a first terminal (A), and separately sending (5) the media content itself, the representation being smaller than the media content itself.

25. An apparatus as claimed in claim 24, comprising the first terminal (A).

26. A method of including media content in a session invite procedure of a push to talk type service, **characterised by** comprising receiving (3) a representation of the media content in a message inviting a second terminal (B) to establish a push to talk type session with a first terminal (A), and separately receiving (5) the media content itself, the representation being smaller than the media content itself.

27. An apparatus operable to include media content in a session invite procedure of a push to talk type service, **characterised by** comprising means (B5) for receiving (3) a representation of the media content in a message inviting a second terminal (B) to establish a push to talk type session with a first terminal (A), and separately receiving (5) the media content itself, the representation being smaller than the media content itself.

28. An apparatus as claimed in claim 27, comprising the second terminal (B).

29. An operating program which, when loaded into an apparatus, causes the apparatus to become an apparatus as claimed in claim 24, 25, 27 or 28.

30. An operating program which, when run on an apparatus, causes the apparatus to carry out a method as claimed in any one of claims 1 to 23 or 26.

31. An operating program as claimed in claim 29 or 30, carried on a carrier medium.

32. An operating program as claimed in claim 31, wherein the carrier medium is a transmission medium.

33. An operating program as claimed in claim 31, wherein the carrier medium is a storage medium.

## Patentansprüche

1. Verfahren zum Einschließen von Medieninhalt in eine Sitzungs-Aufforderungsprozedur (Session Invite Procedure) eines Push-to-Talk-Typ-Dienstes, **dadurch gekennzeichnet, dass** es, wenigstens falls bestimmt wird, dass der Medieninhalt größer als eine vorbestimmte Größe ist, Folgendes umfasst: Senden (2) einer Repräsentation des Medieninhalts in einer Nachricht, die ein zweites Endgerät (B) auffordert, eine Push-to-Talk-Typ-Sitzung mit einem ersten Endgerät (A) aufzubauen, und getrenntes Senden (5) des Medieninhalts selbst, wobei die Repräsentation kleiner ist als der Medieninhalt selbst.

2. Verfahren nach Anspruch 1, Folgendes umfassend: Senden des Medieninhalts selbst in der Sitzungs-Aufforderungsnachricht, falls bestimmt wird, dass der Medieninhalt nicht größer als die vorbestimmte Größe ist.

3. Verfahren nach Anspruch 1 oder 2, Folgendes umfassend: Senden der Sitzungs-Aufforderungsnachricht vom ersten Endgerät (A) an einen Server (S), der zum Steuern der Sitzung designiert ist, und Weiterleiten der Aufforderungsnachricht vom Server (S) an das zweite Endgerät (B).

4. Verfahren nach Anspruch 1, 2 oder 3, das Erzeugen der Repräsentation aus dem Medieninhalt umfassend.

5. Verfahren nach Anspruch 4, worin die Repräsentation am ersten Endgerät (A) erzeugt wird.

6. Verfahren nach einem vorhergehenden Anspruch, das Senden des Medieninhalts umfassend, sodass er zur Verwendung am zweiten Endgerät (B) verfügbar ist, nachdem die Sitzungsaufforderung am zweiten Endgerät (B) angenommen wurde.

7. Vorrichtung nach einem vorhergehenden Anspruch, worin mindestens eins von Folgenden vom ersten Endgerät (A) an das zweite Endgerät (B) gesendet wird: die Sitzungs-Aufforderungsnachricht und der Medieninhalt.

8. Verfahren nach einem vorhergehenden Anspruch, das Senden des Medieninhalts umfassend, nachdem die Sitzungsaufforderung am zweiten Endgerät (B) angenommen wurde.

9. Verfahren nach Anspruch 8, worin dem ersten Endgerät (A) nach Annahme der Sitzungsaufforderung eine Sprecherlaubnis ("Floor") zugeordnet wird, und das Senden des Medieninhalts auf der Basis der zugeordneten Sprecherlaubnis umfassend.

10. Verfahren nach einem vorhergehenden Anspruch, das Senden des Medieninhalts umfassend, ohne dass ihn das zweite Endgerät (B) explizit angefordert hat.

11. Verfahren nach einem der Ansprüche 1 bis 10, das Senden des Medieninhalt als Antwort darauf umfassend, dass er vom zweiten Endgerät (B) angefordert wurde.

12. Verfahren nach einem vorhergehenden Anspruch, das Empfangen des Medieninhalts am zweiten Endgerät (B) als einen Hintergrundprozess auf dem zweiten Endgerät (B) umfassend.

13. Verfahren nach einem vorhergehenden Anspruch, worin die Repräsentation einen Auszug aus dem Medieninhalt umfasst.

14. Verfahren nach einem vorhergehenden Anspruch, worin die Repräsentation mindestens einen Teil des Medieninhalts umfasst, auf den Komprimierung und/oder Auflösungsreduktion angewendet wurde.

15. Verfahren nach einem vorhergehenden Anspruch, worin der Medieninhalt einen oder mehrere von Folgenden umfasst: Bildinhalt, Videoinhalt und Audioinhalt.

16. Verfahren nach einem vorhergehenden Anspruch, nach Empfang das Darstellen des Medieninhalts am zweiten Endgerät umfassend.

17. Verfahren nach Anspruch 16, wenn von Anspruch 15 abhängig, worin das Darstellen des Medieninhalts Folgendes umfasst: im Fall von Bildinhalt das Anzeigen des Bildinhalts auf einem Bildschirm des zweiten Endgeräts (B), im Fall von Videoinhalt das Abspielen des Videoinhalts auf einem Bildschirm des zweiten Endgeräts (B) und im Fall von Audioinhalt das Abspielen des Audioinhalts auf einem Lautsprecher des zweiten Endgeräts (B).

18. Verfahren nach Anspruch 16 oder 17, worin der Medieninhalt als Antwort auf eine Anforderung von einem Benutzer des zweiten Endgeräts (B) dargestellt wird.

19. Verfahren nach einem vorhergehenden Anspruch, worin die Aufforderungsnachricht eine Aufforderungsnachricht des SIP (Session Initiation Protocol) ist.

20. Verfahren nach einem vorhergehenden Anspruch, worin der Push-to-Talk-Typ-Dienst ein PoC(Push-to-Talk over Cellular)-Dienst ist.

21. Verfahren nach einem vorhergehenden Anspruch, worin der Push-to-Talk-Typ-Dienst ein Konferenzdienst ist.

22. Verfahren nach einem vorhergehenden Anspruch, worin die Aufforderungsnachricht mindestens eine implizite Sprecherlaubnisanforderung für die angeforderte Sitzung umfasst.

23. Verfahren nach einem vorhergehenden Anspruch, das Verarbeiten des Medieninhalts umfassend, bevor er gesendet wird.

24. Vorrichtung, betriebsfähig zum Einschließen von Medieninhalt in eine Sitzungs-Aufforderungsprozedur eines Push-to-Talk-Typ-Dienstes, **dadurch gekennzeichnet, dass** sie Mittel (A5) umfasst, um, wenigstens falls bestimmt wird, dass der Medieninhalt größer als eine vorbestimmte Größe ist, eine Repräsentation des Medieninhalts in einer Nachricht zu senden (2), die ein zweites Endgerät (B) auffordert, eine Push-to-Talk-Typ-Sitzung mit einem ersten Endgerät (A) aufzubauen, und den Medieninhalt selbst getrennt zu senden (5), wobei die Repräsentation kleiner ist als der Medieninhalt selbst.

25. Vorrichtung nach Anspruch 24, das erste Endgerät (A) umfassend.

26. Verfahren zum Einschließen von Medieninhalt in eine Sitzungs-Aufforderungsprozedur eines Push-to-Talk-Typ-Dienstes, **dadurch gekennzeichnet, dass** es umfasst, eine Repräsentation des Medieninhalts in einer Nachricht zu empfangen (3), die ein zweites Endgerät (B) auffordert, eine Push-to-Talk-Typ-Sitzung mit einem ersten Endgerät (A) aufzubauen und den Medieninhalt selbst getrennt zu empfangen (5), wobei die Repräsentation kleiner ist als der Medieninhalt selbst.

27. Vorrichtung, betriebsfähig zum Einschließen von Medieninhalt in eine Sitzungs-Aufforderungsprozedur eines Push-to-Talk-Typ-Dienstes, **dadurch gekennzeichnet, dass** sie Mittel (B5) umfasst, um eine Repräsentation des Medieninhalts in einer Nachricht zu empfangen (3), die ein zweites Endgerät (B) auffordert, eine Push-to-Talk-Typ-Sitzung mit einem ersten Endgerät (A) aufzubauen, und den Medieninhalt selbst getrennt zu empfangen (5), wobei die Repräsentation kleiner ist als der Medieninhalt selbst.

28. Vorrichtung nach Anspruch 27, das zweite Endgerät (B) umfassend.

29. Betriebsprogramm, das durch Laden in eine Vorrichtung bewirkt, dass die Vorrichtung eine Vorrichtung nach Anspruch 24, 25, 27 oder 28 wird.

30. Betriebsprogramm, das durch Ablaufen auf einer Vorrichtung bewirkt, dass die Vorrichtung ein Verfahren nach einem der Ansprüche 1 bis 23 oder 26 ausführt.

31. Betriebsprogramm nach Anspruch 29 oder 30, das auf einem Trägermedium getragen wird.

32. Betriebsprogramm nach Anspruch 31, worin das Trägermedium ein Übertragungsmedium ist.

33. Betriebsprogramm nach Anspruch 31, worin das Trägermedium ein Speichermedium ist.

## Revendications

1. Procédé destiné à inclure un contenu multimédia dans une procédure d'invitation à une session d'un service de type messagerie vocale instantanée, **caractérisé en ce qu'**il comprend, au moins, s'il est déterminé que le contenu multimédia est supérieur à une taille prédéterminée, les étapes ci-après consistant à envoyer (2) une représentation du contenu multimédia dans un message invitant un second terminal (B) à établir une session de type messagerie vocale instantanée avec un premier terminal (A) et, séparément, à envoyer (5) le contenu multimédia lui-même, la représentation étant d'une taille inférieure au contenu multimédia lui-même.

2. Procédé selon la revendication 1, comprenant l'étape consistant à envoyer le contenu multimédia lui-même dans le message d'invitation à une session, s'il est déterminé que le contenu multimédia n'est pas supérieur à la taille prédéterminée.

3. Procédé selon la revendication 1 ou 2, comprenant l'étape consistant à envoyer le message d'invitation à une session, du premier terminal (A) à un serveur (S) désigné pour commander la session, et l'étape consistant à acheminer le message d'invitation du serveur (S) au second terminal (B).

4. Procédé selon la revendication 1, 2 ou 3, comprenant l'étape consistant à générer la représentation à partir du contenu multimédia.

5. Procédé selon la revendication 4, dans lequel la représentation est générée au niveau du premier terminal (A).

6. Procédé selon l'une quelconque des revendications précédentes, comprenant l'étape consistant à envoyer le contenu multimédia de sorte qu'il est disponible pour une utilisation au niveau du second terminal (B) dès lors que l'invitation à une session a été acceptée au niveau du second terminal (B).

7. Dispositif selon l'une quelconque des revendications précédentes, dans lequel au moins l'un parmi le message d'invitation à une session et le contenu multimédia est envoyé du premier terminal (A) au second terminal (B).

8. Procédé selon l'une quelconque des revendications précédentes, comprenant l'étape consistant à envoyer le contenu multimédia dès lors que l'invitation à une session a été acceptée au niveau du second terminal (B).

9. Procédé selon la revendication 8, dans lequel des ressources sont accordées au premier terminal (A) après acceptation de l'invitation à une session, et comprenant l'étape consistant à envoyer le contenu multimédia sur les ressources accordées.

10. Procédé selon l'une quelconque des revendications précédentes, comprenant l'étape consistant à envoyer le contenu multimédia sans qu'une demande explicite concernant ledit contenu ne soit émise par le second terminal (B).

11. Procédé selon l'une quelconque des revendications 1 à 10, comprenant l'étape consistant à envoyer le contenu multimédia en réponse à une demande concernant ledit contenu, émise par le second terminal (B).

12. Procédé selon l'une quelconque des revendications précédentes, comprenant l'étape consistant à recevoir le contenu multimédia au niveau du second terminal (B) sous la forme d'un processus d'arrière-plan mis en oeuvre sur le second terminal (B).

13. Procédé selon l'une quelconque des revendications précédentes, dans lequel la représentation comprend un extrait du contenu multimédia.

14. Procédé selon l'une quelconque des revendications précédentes, dans lequel la représentation comprend au moins une partie du contenu multimédia, à laquelle une compression et/ou une réduction de résolution a été appliquée.

15. Procédé selon l'une quelconque des revendications précédentes, dans lequel le contenu multimédia comprend un ou plusieurs parmi un contenu d'image, un contenu vidéo et un contenu audio.

16. Procédé selon l'une quelconque des revendications précédentes, comprenant l'étape consistant à présenter le contenu multimédia au niveau du second terminal à l'issue de la réception.

17. Procédé selon la revendication 16, lorsque dépendante de la revendication 15, dans lequel l'étape de présentation du contenu multimédia comprend, dans le cas où il s'agit d'un contenu d'image, l'étape consistant à afficher le contenu d'image sur un écran du second terminal (B), et, dans le cas où il s'agit d'un contenu vidéo, l'étape consistant à lire le contenu vidéo sur un écran du second terminal (B), et, dans le cas où il s'agit d'un contenu audio, l'étape consistant à lire le contenu audio sur un haut-parleur du second terminal (B).

18. Procédé selon la revendication 16 ou 17, dans lequel le contenu multimédia est présenté en réponse à une demande d'un utilisateur du second terminal (B).

19. Procédé selon l'une quelconque des revendications précédentes, dans lequel le message d'invitation est un message d'invitation du protocole d'ouverture de session.

20. Procédé selon l'une quelconque des revendications précédentes, dans lequel le service de type messagerie vocale instantanée est un service cellulaire de messagerie vocale instantanée.

21. Procédé selon l'une quelconque des revendications précédentes, dans lequel le service de type messagerie vocale instantanée est un service de téléconférence.

22. Procédé selon l'une quelconque des revendications précédentes, dans lequel le message d'invitation comprend au moins une demande de ressources implicite pour la session requise.

23. Procédé selon l'une quelconque des revendications précédentes, comprenant l'étape consistant à traiter le contenu multimédia avant de l'envoyer.

24. Dispositif exploitable de manière à inclure un contenu multimédia dans une procédure d'invitation à une session d'un service de type messagerie vocale instantanée, **caractérisé en ce qu'**il comprend des moyens (A5) pour, au moins, s'il est déterminé que le contenu multimédia est supérieur à une taille prédéterminée, envoyer (2) une représentation du contenu multimédia dans un message invitant un second terminal (B) à établir une session de type messagerie vocale instantanée avec un premier terminal (A) et, séparément, envoyer (5) le contenu multimédia lui-même, la représentation étant d'une taille inférieure au contenu multimédia lui-même.

25. Dispositif selon la revendication 24, comprenant le premier terminal (A).

26. Procédé destiné à inclure un contenu multimédia dans une procédure d'invitation à une session d'un service de type messagerie vocale instantanée, **caractérisé en ce qu'**il comporte l'étape consistant à recevoir (3) une représentation du contenu multimédia dans un message invitant un second terminal (B) à établir une session de type messagerie vocale instantanée avec un premier terminal (A) et, séparément, à recevoir (5) le contenu multimédia lui-même, la représentation étant d'une taille inférieure au contenu multimédia lui-même.

27. Dispositif exploitable de manière à inclure un contenu multimédia dans une procédure d'invitation à une session d'un service de type messagerie vocale instantanée, **caractérisé en ce qu'**il comporte des moyens (B5) pour recevoir (3) une représentation du contenu multimédia dans un message invitant un second terminal (B) à établir une session de type messagerie vocale instantanée avec un premier terminal (A) et, séparément, recevoir (5) le contenu multimédia lui-même, la représentation étant d'une taille inférieure au contenu multimédia lui-même.

28. Dispositif selon la revendication 27, comprenant le second terminal (B).

29. Programme d'exploitation lequel, lorsqu'il est chargé dans un dispositif, amène le dispositif à opérer à la manière d'un dispositif selon la revendication 24, 25, 27 ou 28.

30. Programme d'exploitation lequel, lorsqu'il est exécuté sur un dispositif, amène le dispositif à mettre en oeuvre un procédé selon l'une quelconque des revendications 1 à 23 ou 26.

31. Programme d'exploitation selon la revendication 29 ou 30, lequel est transporté dans un support.

32. Programme d'exploitation selon la revendication 31, dans lequel le support est un support de transmission.

33. Programme d'exploitation selon la revendication 31, dans lequel le support est un support de stockage.
